# EUROPEAN PATENT APPLICATION

(11) **EP 4 769 509 A1**
(43) Date of publication of application: **01.07.2026**
(21) Application number: 24905706.8
(22) Date of filing: 23.09.2024
(51) Int. Cl.: H01M 4/13, H01M 10/052, H01M 50/46

(54) **ELECTRODE SHEET AND ROLL CORE BATTERY**

(30) Priority: 21.12.2023 CN 202323502541 U
(71) Applicant: Zhuhai CosMX Battery Co., Ltd., Zhuhai, Guangdong 519180 (CN)
(72) Inventor: HOU, Yanni, Guangdong 519180 (CN); FU, Xichao, Guangdong 519180 (CN); XIE, Jichun, Guangdong 519180 (CN)
(74) Representative: Murgitroyd & Company
(86) International application number: PCT/CN2024/120445
(87) International publication number: WO 2025/130215

(57) **Abstract**

An electrode sheet, including a current collector (1) and an active material layer (2) applied on either side of the current collector (1). The active material layer (2) on at least one side of the current collector (1) is provided with a plurality of first regions (3) in a first direction, with a region gap Dm between adjacent first regions (3). Each of the first regions (3) is provided with a plurality of grooves (31), and adjacent grooves (31) are spaced apart by a distance Dt in a direction perpendicular to a long axis of each of the grooves (31), where Dt > Dm. The first direction is a length direction or width direction of the electrode sheet.

## Description

### TECHNICAL FIELD

The present application relates to the technical field of batteries, and in particular, to an electrode sheet and also a wound cell having the electrode sheet.

### TECHNICAL FIELD

With the development of technology, consumers have higher demands for energy density and rate of batteries. At present, achieving fast charging in the industry inevitably requires sacrificing some energy density. Therefore, the new generation of polymer lithium-ion batteries needs a balance between high rate and high energy density.

During roll-pressing of a negative electrode sheet of a lithium-ion battery, negative active material layers on two sides of the negative electrode sheet that are in direct contact with press rolls become denser with low porosity. This lengthens a migration path of an electrolyte in the negative electrode sheet. The lengthened migration path results in a decrease in the rate performance of the negative electrode sheet. In addition, the potential of a surface of a negative electrode sheet of electrode sheets close to a separator is lower. This leads to uneven polarization and nonuniform electrolyte concentration, resulting in low utilization rate of the negative electrode sheet and high risk of lithium plating.

### SUMMARY

In view of this, an object of the present application is to provide an electrode sheet and a wound cell. The electrode sheet is provided with a plurality of first regions having grooves, which can lower the risk of lithium plating and increase the utilization rate of a negative electrode sheet.

To achieve the above object, the present application provides the following technical solutions.

In a first aspect, an electrode sheet is provided. The electrode sheet includes a current collector and an active material layer applied on either side of the current collector, where

the active material layer on at least one side of the current collector is provided with a plurality of first regions in a first direction, with a region gap Dm between adjacent first regions; and

each of the first regions is provided with a plurality of grooves, and adjacent grooves are spaced apart by a distance Dt in a direction perpendicular to a long axis of each of the grooves, where Dt > Dm, and the first direction being a length direction or width direction of the electrode sheet.

Optionally, in the electrode sheet described above, 1.1Dm < Dt < 8Dm.

Optionally, 1.2Dm < Dt < 3Dm.

Optionally, in the electrode sheet described above, in a second direction perpendicular to the first direction, a dimension of the first region is W1 and a dimension of the electrode sheet is W2, where 0.85W2 < W1 < W2.

Optionally, in the electrode sheet described above, a line connecting ends on a same side of the grooves in the first region is a straight line, which forms an angle θ with the first direction, where 0° ≤ θ ≤ 90°.

Optionally, in the electrode sheet described above, the adjacent first regions are arranged in a same direction as the grooves in one of the first regions.

Optionally, in the electrode sheet described above, the adjacent first regions are spaced apart in a second direction perpendicular to the first direction, and the plurality of grooves in one of the first regions are spaced apart in the first direction.

Optionally, the adjacent first regions are spaced apart in the first direction, and the plurality of grooves in one of the first regions are spaced apart in a second direction perpendicular to the first direction.

Optionally, in the electrode sheet described above, in a second direction perpendicular to the first direction, the groove in the first region close to an edge of the electrode sheet is spaced apart from the edge of the electrode sheet by a distance Dp, where 1.1Dm ≤ Dp ≤ 1.4Dm.

Optionally, in the electrode sheet described above, a dimension of the groove along its short axis is W3, where 1/5 < W3/Dm < 1/2.

Optionally, in the electrode sheet described above, in the first direction, a dimension of the first region is L1, where 50Dm ≤ L1 ≤ 400Dm.

Optionally, in the electrode sheet described above, the grooves in the adjacent first regions are staggered arranged in a second direction perpendicular to the first direction or in the first direction.

Optionally, in the second direction, a staggered dimension between the grooves in the adjacent first regions is x, where 50 µm ≤ x ≤ 200 µm.

Optionally, 100 µm ≤ Dm ≤ 300 µm.

A wound cell includes a first electrode sheet, a second electrode sheet and a separator between the first electrode sheet and the second electrode sheet, the first electrode sheet and/or the second electrode sheet being the electrode sheet described above, and the first electrode sheet, the second electrode sheet and the separator being stacked and wound to form a wound core including a bending section and a straight section.

Optionally, in the wound cell described above,
in the same straight section, a quantity of the region gaps in the first direction is N1; and
in the same bending section, a quantity of the region gaps in the first direction is N2, where N1 > N2 ≥ 1.

Optionally, in the wound cell described above, two adjacent first regions are respectively located in the straight section and the bending section, and the region gap between the two adjacent first regions is located in the bending section.

As can be seen from the above technical solutions, in the electrode sheet and the wound cell according to the present application, the active material layer on at least one side of the current collector is provided with a plurality of first regions having grooves in the length direction of the electrode sheet, thereby reducing the compactness of the active material layer on the side of the electrode sheet that is in direct contact with a press roll during roll-pressing of the electrode sheet. This is equivalent to forming oriented grooved rapid ion channels on a surface of the electrode sheet, addressing the problem of the lengthened migration path of an electrolyte in the negative electrode sheet, expanding a lithium plating window, lowering the risk of lithium plating, and increasing the utilization rate of the negative electrode sheet. Moreover, the potential of the side of the negative electrode sheet close to the separator is increased, the cycling performance of the cell is improved, the electrolyte concentration is homogenized, and the utilization rate and energy density of the negative electrode sheet are increased.

### BRIEF DESCRIPTION OF THE DRAWINGS

In order to illustrate the technical solutions in embodiments of the present application or in the prior art more clearly, the accompanying drawings required for describing the embodiments or the prior art will be briefly introduced below. Apparently, the drawings in the following description merely show some of the embodiments of the present application, and those of ordinary skill in the art would have obtained other drawings from these drawings without involving any inventive effort.
FIG. 1 is a schematic structural diagram of a wound core according to an embodiment of the present application.
FIG. 2 is a cross-sectional view of an electrode sheet according to an embodiment of the present application.
FIG. 3 is a first schematic structural diagram of an electrode sheet according to an embodiment of the present application.
FIG. 4 is a second schematic structural diagram of an electrode sheet according to an embodiment of the present application.
FIG. 5 is a third schematic structural diagram of an electrode sheet according to an embodiment of the present application.
FIG. 6 is a fourth schematic structural diagram of an electrode sheet according to an embodiment of the present application.
FIG. 7 is a fifth schematic structural diagram of an electrode sheet according to an embodiment of the present application. and
FIG. 8 is a sixth schematic structural diagram of an electrode sheet according to an embodiment of the present application.

### Reference signs:

1. current collector; 2. active material layer; 3. first region; 31. groove; 41. bending section; 42. straight section; 5. uncoated foil region.

### DETAILED DESCRIPTION OF THE EMBODIMENTS

Technical solutions in embodiments of the present application are clearly and completely described below with reference to the drawings in the embodiments of the present application. Apparently, the embodiments described are merely some rather than all of the embodiments of the present application. All other embodiments obtained by those of ordinary skill in the art based on the embodiments of the present application without involving any effort shall fall within the scope of protection of the present application.

In the description of the present application, it should be noted that orientation or position relationships indicated by the terms such as "center", "upper", "lower", "front", "rear", "left", "right", "vertical", "horizontal", "inner", and "outer" are based on orientation or position relationships shown in the accompanying drawings or are orientation or position relationships to which the product of the present application is customarily placed when in use, which are merely used for convenience of describing the present application and simplifying the description, rather than indicating or implying that an indicated device or element needs to have a specific orientation or be constructed and operated in a specific orientation, and therefore cannot be understood as a limitation on the present application. In addition, the terms "first", "second", and "third" are used for descriptive purposes only, and cannot be construed as indicating or implying relative importance.

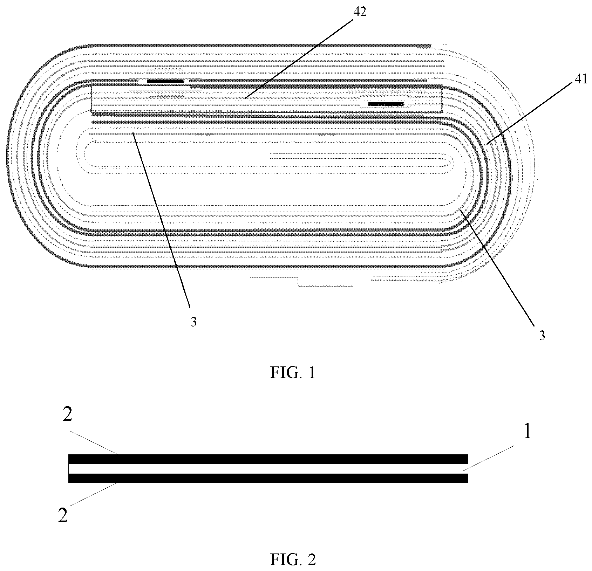

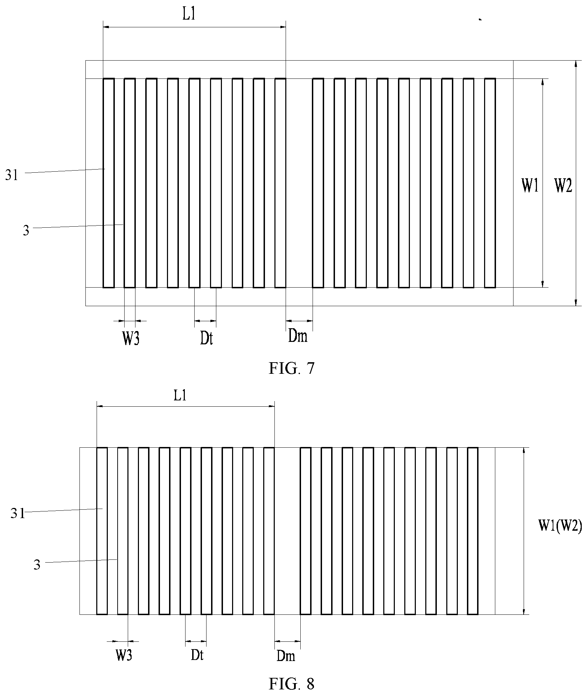

As shown in Figs. 1 to 8, embodiments of the present application provide an electrode sheet.

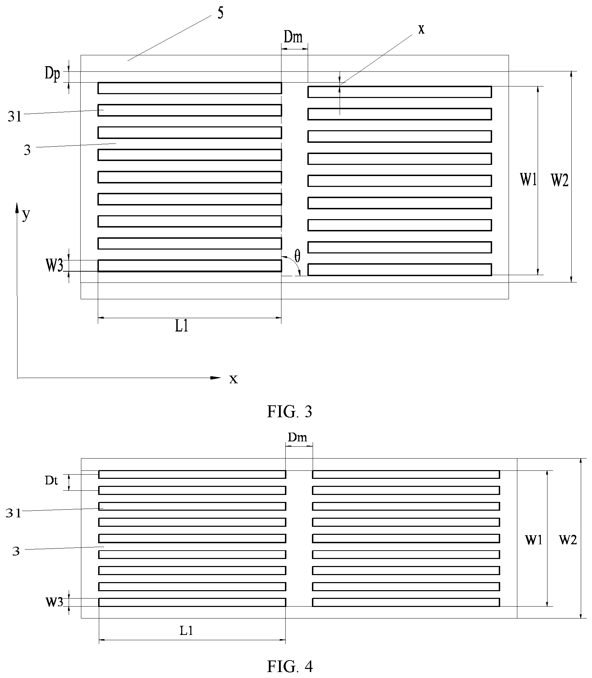

First, the electrode sheet includes a current collector 1 and an active material layer 2 applied on either side of the current collector 1(see FIG. 2 for details). The active material layer 2 on at least one side of the current collector 1 is provided with a plurality of first regions 3 in a first direction, with a region gap Dm between adjacent first regions 3. Each of the first regions 3 is provided with a plurality of grooves 31, and adjacent grooves 31 are spaced apart by a distance Dt in a direction perpendicular to a long axis of each of the grooves 31, where Dt > Dm. This ensures that the length of the groove 31 approaches the maximum value, the area of the groove 31 is maximized and the number of lithium ion reaction sites is increased, thereby improving kinetic performance of the cell. It should be noted that, as detailed in FIG. 3, the first direction may be, for example, a length direction (x) of the electrode sheet or a width direction (y) of the electrode sheet.

As can be seen, in the electrode sheet according to the embodiments of the present application, the active material layer 2 on at least one side of the current collector 1 is provided with a plurality of first regions 3 having grooves in the first direction, thereby reducing the compactness of the active material layer 2 on the side of the electrode sheet that is in direct contact with a press roll during roll-pressing of the electrode sheet. This is equivalent to forming oriented grooved rapid ion channels on a surface of the electrode sheet, addressing the problem of the lengthened migration path of an electrolyte in a negative electrode sheet, expanding a lithium plating window, lowering the risk of lithium plating, and increasing the utilization rate of the negative electrode sheet. Moreover, the potential of the side of the negative electrode sheet close to a separator is increased, the cycling performance of the cell is improved, the electrolyte concentration is homogenized, and the utilization rate and energy density of the negative electrode sheet are increased.

In a specific implementation, 1.1Dm < Dt < 8Dm. It should be noted that, with the proportional relationship of 1.1Dm < Dt < 8Dm, the risk of lithium plating on the electrode sheet is significantly reduced. It should be noted that the optimal proportional relationship is 1.2Dm < Dt < 3Dm. However, it is not limited thereto. The proportional relationship between Dt and Dm can be specifically designed by those skilled in the art according to actual requirements. A smaller Dm can ensure the maximum area of the grooves of the electrode sheet while reducing the adhesion between the electrode sheet and the separator in a bending section of the wound core, thereby ensuring electrolyte infiltration while improving the stability of the electrode sheet.

In a specific implementation, as shown in Figs. 3 to 8, in a second direction perpendicular to the first direction, a dimension of the first region 3 is W1 and a dimension of the electrode sheet is W2, where 0.85W2 < W1 < W2. It should be noted that, as detailed in FIG. 3, the second direction is perpendicular to the first direction, and the second direction may be, for example, the width direction (y) of the electrode sheet or the length direction (x) of the electrode sheet. In the second direction, the dimension of the first region 3 approaches the process maximum value, so that the total surface area of the plurality of grooves 31 in the first region 3 can be increased, maintaining the uniform overall stress of the electrode sheet, enhancing the mechanical stability of the electrode sheet, avoiding excessive expansion of some regions during long cycles, and helping to prolong cycle life of the cell. Moreover, the mechanical stability of the cell can be ensured, and stress concentration on the electrode sheet caused by an excessively small W1 can be avoided, thereby avoiding an increase in the risk of material damage and fatigue. In addition, a decrease in the utilization rate of the electrode sheet and a reduction in the energy density of the cell caused by an excessively large W1 can also be avoided. Therefore, the matching between W1 and W2 can achieve good mechanical stability. In addition, when W1 is excessively small, it may restrict ion transport in the cell, resulting in degradation of the charge and discharge performance of the cell. When W1 is excessively large, it may result in uneven distribution of active materials, affecting the energy density and cycle life of the cell. The matching between W1 and W2 may provide more ion channels, reducing resistance to ion transport, improving the charge and discharge efficiency and power output of the cell, enabling control over the distribution of active materials, and improving the performance and stability of the cell. In summary, when 0.85W2 < W1 < W2, good mechanical stability, ion transport efficiency, and uniformity distribution of active materials can be achieved, thereby improving the performance and cycle life of the lithium-ion battery.

In a specific implementation, a line connecting ends on the same side of the grooves 31 in the first region 3 is a straight line, which forms an angle θ with the first direction, where 0° ≤ θ ≤ 90°. This ensures that during current carrying of the electrode sheet, short circuits of the grooves 31 can be avoided and inconsistent parameters of the grooves 31 can also be avoided, which helps to ensure the quality of the grooves 31 and improve the electrolyte retention capacity. It should be noted that the current carrying of the electrode sheet refers to a process where current flows through the electrode sheet; as ions in the electrolyte react, an oxide layer or reduction layer gradually grows on the surface of the electrode sheet. The short circuits of the grooves 31 refer to a phenomenon where current bypasses the electrolyte to cause direct connection between the grooves 31 provided on the electrode sheet for an electrolytic capacitor. The short circuits of the grooves 31 are usually caused by insufficient gap between the grooves 31. The grooves 31 are provided to increase the contact area between an electrode and the electrolyte and to provide sufficient electrolyte storage capacity to promote the transport and reaction of the electrolyte. However, if the gap between the grooves 31 is excessively small, current may bypass the electrolyte when flowing through the electrolyte and directly form a current path between the grooves 31, resulting in the short circuits. The short circuits of the grooves 31 may cause failure of contact between part of the electrode surface and the electrolyte, reducing the effective electrode area and thus lowering capacitance of the capacitor. The current bypasses the electrolyte and directly flows through a connection path between the grooves 31, which weakens the transport and reaction capacities of the electrolyte. This may affect the charge storage and release capacities of the capacitor, resulting in performance degradation. Because the short circuits of the grooves 31 may create additional current paths, the current may flow through the connection path between the grooves 31, resulting in the increased internal resistance and energy loss of the capacitor.

In a specific implementation, as detailed in Figs. 3 to 5, a line connecting ends on the same side of the grooves 31 in the first region 3 is a straight line, which forms an angle θ with the length direction of the electrode sheet, where θ is equal to 90°.

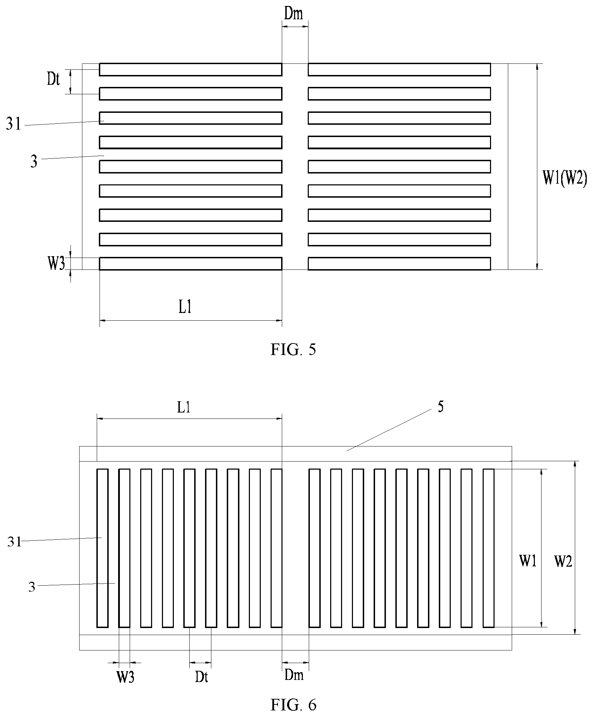

In a specific implementation, as detailed in Figs. 6 to 8, a line connecting ends on the same side of the grooves 31 in the first region 3 is a straight line, which forms an angle θ with the length direction of the electrode sheet, where θ is equal to 0°.

In some embodiments, the adjacent first regions 3 are arranged in the same direction as the grooves in the first region 3. This facilitates the electrode sheet grooving process.

In some embodiments, the adjacent first regions 3 are spaced apart in the second direction of the electrode sheet, and the grooves in one of the first regions 3 are spaced apart in the first direction of the electrode sheet. Alternatively, the adjacent first regions 3 are spaced apart in the first direction of the electrode sheet, and the grooves in one of the first regions 3 are spaced apart in the second direction of the electrode sheet. In one example, the adjacent first regions 3 are spaced apart in the first direction of the electrode sheet, and the grooves in the first region extend in the first direction of the electrode sheet. In another example, the adjacent first regions 3 are spaced apart in the second direction of the electrode sheet, and the grooves in the first region extend in the second direction of the electrode sheet.

In some embodiments, in the second direction perpendicular to the first direction, the groove in the first region 3 close to an edge of the electrode sheet is spaced apart from the edge of the electrode sheet by a distance Dp, where 1.1Dm ≤ Dp ≤ 1.4Dm. Thus, when uncoated foil regions 5 are provided on two sides in the second direction (see Figs. 3, 4, 6, and 7 for details), for a stripe-coated electrode sheet, thermal stress on the foil material caused by laser effects on the uncoated foil regions 5 during laser cutting for forming grooves can be avoided, thereby avoiding wrinkles in the uncoated foil regions 5 and improving process yield.

In some embodiments, as shown in Figs. 4, 5, and 8, in the second direction, the groove in the first region 3 close to the edge of the electrode sheet is spaced apart from the edge of the electrode sheet by a distance Dp, where Dp is equal to 0, that is, the grooves in the first region run through the electrode sheet in the second direction.

In a specific implementation, a dimension of the groove 31 along its short axis is W3 (i.e., the groove width), where 1/5 < W3/Dm < 1/2. This avoids the accumulation of thermal effects during processing of the grooves 31 caused by an excessively large groove width, thereby avoiding an adverse effect on the overall tensile strength of the electrode sheet. This also avoids the problems of low utilization rate of the electrode sheet and high risk of lithium plating caused by an excessively small groove width.

In a specific implementation, in the first direction, a dimension of the first region 3 is L1, where 50Dm ≤ L1 ≤ 400Dm. This ensures that the CB (cell balance, referring to a margin by which the negative electrode capacity exceeds the positive electrode capacity in a directly opposite position) value is within a certain range, thereby providing sufficient margin for the electrode sheet during lithiation, and preventing lithium plating. In addition, for a thick electrode sheet, the provision of the grooves 31 may improve extraction of gravimetric capacity of the active material layers 2 close to the current collector 1. The energy density of the cell is improved as compared to a cell without the grooves 31 or provided with a small quantity of grooves 31.

In a specific implementation, the grooves 31 in the adjacent first regions 3 are staggered in the second direction perpendicular to the first direction or in the first direction. The staggered arrangement can improve the process efficiency of the grooves 31.

In a specific implementation, in the second direction, a staggered dimension between the grooves in the adjacent first regions 3 is x, where 50 µm ≤ x ≤ 200 µm. This can improve the process efficiency of the grooves 31. However, it is not limited thereto. The staggered dimension between the grooves in the adjacent first regions 3 can be specifically designed by those skilled in the art according to actual requirements.

In a specific implementation, 100 µm ≤ Dm ≤ 300 µm. That is, in the first direction, the staggered dimension of the adjacent first regions 3 is Dm (i.e., the spacing between the adjacent first regions 3), and such a staggered arrangement can improve the process efficiency of the grooves 31. However, it is not limited thereto. The specific value for Dm can be specifically designed by those skilled in the art according to actual requirements.

In a second aspect, the embodiments of the present application provide a wound cell, including a first electrode sheet, a second electrode sheet, and a separator between the first electrode sheet and the second electrode sheet. The first electrode sheet and/or the second electrode sheet is the electrode sheet described above. The first electrode sheet, the second electrode sheet, and the separator are stacked and wound to form a wound core including a bending section 41 and a straight section 42.

In the wound cell according to the embodiments of the present application, the active material layer 2 on at least one side of the current collector 1 is provided with a plurality of first regions 3 having grooves in the first direction, thereby reducing the compactness of the active material layer 2 on the side of the electrode sheet that is in direct contact with a press roll during roll-pressing of the electrode sheet. This is equivalent to forming oriented grooved rapid ion channels on a surface of the electrode sheet, addressing the problem of the lengthened migration path of an electrolyte in a negative electrode sheet, expanding a lithium plating window, lowering the risk of lithium plating, and increasing the utilization rate of the negative electrode sheet. Moreover, the potential of the side of the negative electrode sheet close to the separator is increased, the cycling performance of the cell is improved, the electrolyte concentration is homogenized, and the utilization rate and energy density of the negative electrode sheet are increased.

In a specific implementation, a region gap is formed between adjacent first regions 3. In the same straight section 42, a quantity of region gaps in the first direction is N1 (the first direction referring to an unwinding direction of the wound electrode sheets of the wound core); and in the same bending section 41, a quantity of region gaps in the first direction is N2 (the first direction referring to the unwinding direction of the wound electrode sheets of the wound core), where N1 > N2 ≥ 1. In the wound cell, the separator is disposed between the adjacent electrode sheets, the small number of matrices in the bending section 41 is conducive to improving the adhesion between the electrode sheets and the separator, thereby ensuring the stability of the charge and discharge process of the cell.

In a specific implementation, two adjacent first regions 3 are respectively located in the straight section 42 and the bending section 41, and the region gap between the two adjacent first regions 3 is located in the bending section 41. In this way, the grooves 31 in the first regions 3 on two sides of the region gap can effectively release the stress on the electrode sheet in the bending section 41, avoiding damage or even breakage of the electrode sheet caused by excessive stress, and improving the safety of the cell.

In a specific implementation, the coated electrode sheets are roll-pressed by the press rolls until they reach the thickness and compaction density required by the process.

In a specific implementation, the grooves 31 in the first region 3 are formed by means of laser. By controlling parameters such as laser power, speed, fill spacing, and frequency, grooves 31 with targeted width, depth and pitch are formed on the electrode sheet. However, it is not limited thereto. Grooves can also be formed by other physical or mechanical means, which can be specifically designed by those skilled in the art according to actual requirements.

In a specific implementation, the electrode sheets which have been grooved are subjected to laser cleaning, and soft tab regions of the electrode sheets are obtained after the cleaning. However, it is not limited thereto. Cleaning methods for the electrode sheets can be specifically designed by those skilled in the art according to actual requirements.

In a specific implementation, the cleaned electrode sheets need to be die-cut, a non-tab region is aligned with a lower edge of a cleaning tank during die cutting, the width of a tab matches the width of the cleaning tank, and the height of the tab is determined by die cutting based on the specific cell height requirement.

Finally, it should also be noted that in the description, relationship terms such as "first" and "second" are merely used to distinguish an entity or operation from another entity or operation, and do not necessarily require or imply that any such actual relationship or order exists between those entities or operations. Moreover, the terms "include", "comprise", or any other variations thereof are intended to cover non-exclusive inclusion, so that a process, method, article, or apparatus that includes a series of elements not only includes those elements but also includes other elements not specifically listed, or elements inherent to such a process, method, article, or apparatus. Without further limitation, an element defined by the phrase "including a..." does not exclude the presence of additional identical elements in the process, method, article, or apparatus that includes the element.

All embodiments in the description are described in a progressive manner. Each embodiment focuses on differences from other embodiments. For the same or similar parts between various embodiments, reference may be made to each other.

The embodiments disclosed above are described to enable a technical person skilled in the art to implement or use the present application. Various modifications to the embodiments are readily apparent to the technical person skilled in the art, and general principles defined herein may be implemented in other embodiments without departing from the spirit or scope of the present application. Therefore, the present application will not be limited to the embodiments described herein but extends to the widest scope that complies with the principles and novelty disclosed herein.

## Claims

1. An electrode sheet, comprising a current collector (1) and active material layers (2) applied on two sides of the current collector (1), wherein
the active material layer (2) on at least one side of the current collector (1) is provided with a plurality of first regions (3) in a first direction, with a region gap Dm between adjacent first regions (3); and
each of the first regions (3) is provided with a plurality of grooves (31), and adjacent grooves (31) are spaced apart by a distance Dt in a direction perpendicular to a long axis of each of the grooves (31), wherein Dt > Dm, and the first direction is a length direction or width direction of the electrode sheet.

2. The electrode sheet according to claim 1, wherein 1.1Dm < Dt < 8Dm.

3. The electrode sheet according to claim 2, wherein 1.2Dm < Dt < 3Dm.

4. The electrode sheet according to any one of claims 1 to 3, wherein in a second direction perpendicular to the first direction, a dimension of the first region (3) is W1 and a dimension of the electrode sheet is W2, wherein 0.85W2 < W1 < W2.

5. The electrode sheet according to any one of claims 1 to 4, wherein a line connecting ends on a same side of the grooves (31) in the first region (3) forms an angle θ with the first direction, wherein 0° ≤ θ ≤ 90°.

6. The electrode sheet according to any one of claims 1 to 5, wherein the adjacent first regions (3) are arranged in a same direction as the grooves (31) in one of the first regions (3).

7. The electrode sheet according to any one of claims 1 to 5, wherein the adjacent first regions (3) are spaced apart in a second direction perpendicular to the first direction, and the plurality of grooves (31) in one of the first regions (3) are spaced apart in the first direction.

8. The electrode sheet according to any one of claims 1 to 5, wherein the adjacent first regions (3) are spaced apart in the first direction, and the plurality of grooves (31) in one of the first regions (3) are spaced apart in a second direction perpendicular to the first direction.

9. The electrode sheet according to any one of claims 1 to 8, wherein in a second direction perpendicular to the first direction, the groove in the first region (3) close to an edge of the electrode sheet is spaced apart from the edge of the electrode sheet by a distance Dp, wherein 1.1Dm ≤ Dp ≤ 1.4Dm.

10. The electrode sheet according to any one of claims 1 to 9, wherein a dimension of the groove (31) along its short axis is W3, wherein 1/5 < W3/Dm < 1/2.

11. The electrode sheet according to any one of claims 1 to 10, wherein in the first direction, a dimension of the first region (3) is L1, wherein 50Dm ≤ L1 ≤ 400Dm.

12. The electrode sheet according to any one of claims 1 to 11, wherein the grooves (31) in the adjacent first regions (3) are staggered arranged in a second direction perpendicular to the first direction or in the first direction.

13. The electrode sheet according to any one of claims 1 to 12, wherein in the second direction, a staggered dimension between the grooves in the adjacent first regions (3) is x, wherein 50 µm ≤ x ≤ 200 µm.

14. The electrode sheet according to any one of claims 1 to 13, wherein 100 µm ≤ Dm ≤ 300 µm.

15. A wound cell, comprising a first electrode sheet, a second electrode sheet and a separator between the first electrode sheet and the second electrode sheet, the first electrode sheet and/or the second electrode sheet being the electrode sheet of any one of claims 1 to 14, and the first electrode sheet, the second electrode sheet and the separator being stacked and wound to form a wound core comprising a bending section (41) and a straight section (42).

16. The wound cell according to claim 15, wherein in the same straight section (42), a quantity of the region gaps in the first direction is N1; and in the same bending section (41), a quantity of the region gaps in the first direction is N2, wherein N1 > N2 ≥ 1.

17. The wound cell according to claim 15 or 16, wherein two adjacent first regions (3) are respectively located in the straight section (42) and the bending section (41), and the region gap between the two adjacent first regions is located in the bending section (41).
